# EUROPEAN PATENT SPECIFICATION

(11) **EP 0 446 064 B1**
(45) Date of publication and mention of the grant of the patent: **07.12.1994**
(21) Application number: 91301944.4
(22) Date of filing: 08.03.1991
(51) Int. Cl.: C03C 13/00

(54) **Glass fiber material containing component of exhaust system.**
Glasfasermaterialenthaltendes Bauteil für Abgassystemen.
Composant de système d'echappement contenant un matériau en fibre de verre.

(30) Priority: 08.03.1990 JP 57232/90
(43) Date of publication of application: 11.09.1991
(73) Proprietor: HONDA GIKEN KOGYO KABUSHIKI KAISHA, Minato-ku Tokyo 107 (JP)
(72) Inventor: Adachi, Ryohei, c/o K. K. Honda Gijutsu Kenkyusho, Wako-shi, Saitama-ken (JP); Ijima, Toshiro, c/o K. K. Honda Gijutsu Kenkyusho, Wako-shi, Saitama-ken (JP)
(74) Representative: Calamita, Roberto

(56) References cited:
- EP-A- 0 194 910
- DE-A- 1 796 339
- GB-A- 2 025 928
- GB-A- 2 027 012
- GB-A- 2 046 726
- GB-A- 2 071 081
- US-A- 3 861 926
- US-A- 4 014 705
- US-A- 4 066 465
- PATENT ABSTRACTS OF JAPAN vol. 7, no. 185 (C-181)(1330) August 13, 1983 & JP-A-58 088 138 (ASAHI FIBER GLASS KK ) May 26, 1983
- WORLD PATENTS INDEX, Derwent Pub.Ltd.GB, accession no.80-81519C, week 46; & JP-A-55126553 (DAIICHI KASEI KK) 01-10-80
- WORLD PATENTS INDEX LATEST, Derwent Pub.Ltd.GB, accession no.87-174499, week 25; & JP-A-62106135 (NIPPON VALQUR KOGYO) 16-05-87
- WORLD PATENTS INDEX LATEST, Derwent Pub.Ltd.GB, accession no.83-48082K, week 20; & JP-A-58060641 (NIPPON ELECTRIC GLASS)
- WORLD PATENTS INDEX LATEST, Derwent Pub.Ltd.,GB, accession no.89-288884, week 40; & JP-A-01211610 (SHOWA DENKO KK) 24-08-89
- PATENT ABSTRACTS OF JAPAN, file supplier JAPS, vol.13, no.591, (M-913) December 26, 1989; & JP-A-01247712 (DAIWA KOGYO KK) 03-10-89
- WORLD PATENT INFORMATION LATEST, Derwent publications Ltd.,accesion number 89-251926, week 35 & JP-A-1182516.

## Description

The present invention relates to a component of an exhaust system for an internal combustion engine including a glass fiber material, in particular a glass fiber-reinforced synethetic resin product.

It is well known to use a synthetic resin product with glass fibers in a silencer for the internal combustion engine in an automobile (for example, see Japanese Patent Application Laid-Open Nos. 211610/89 and 247712/89). In addition, the use of a ZrO₂ containing glass fiber, which has an alkali resistance, is known as a cement reinforcing fiber, (for example, see Japanese Patent Publication Nos. 40126/74; 29726/76 and 5417/86 and Japanese Patent Application Laid-Open Nos. 55309/76 and 71116/78).

It is also well known to use a redox catalyst in the exhaust system of an internal combustion engine for reducing the pollutants in the exhaust gas. Such redox catalysts include a ternary catalyst which effects the oxidation and reduction concurrently and a two stage catalyst which effects oxidation and then the reduction or vice versa.

When such a redox catalyst is provided and if gasoline is used as the fuel, nitrogen acids such as nitric and nitrous acids and ammonia are present in the condensed liquid from the exhaust gas that accumulates in the silencer due to nitrogen oxides (NOₓ) contained in the exhaust gas, and sulfur acids such as sulfuric and sulfurous acids are present in the condensed liquid due to sulfur contained in the gasoline. If an alcohol fuel is used, such sulfur acids are not present. If the internal combustion engine produces a misfiring in the presence of such a redox catalyst, a rapid oxidizing reaction of unburned fuel occurs in the catalyst, so that the temperature of the exhaust gas rapidly rises and may exceed 600°C in some cases. Under such a situation, the glass fiber used in the prior art silencers has a poor acid and alkali resistance due to the physical properties of the glass fiber, because such glass fiber is formed of commercially available E- or C-glass. Another problem is that when the silencer includes an interior material formed of such a glass fiber for the purpose of heat-insulation, the acid, alkali and heat-aging resistances of the interior material are poor.

DE-A-1796339 discloses glass fiber materials containing at least 65% of silica, as fibrous reinforcing materials to increase the alkali resistance and strength retention at temperatures of 50°C or more in cementitious products used in the building industry and in thermosetting resins.

US-A-4066465 discloses glass fiber compositions for use in improving the alkali resistance of concrete or mortar.

JP-A-1182516 discloses a muffler for use in an exhaust system in an internal combustion engine. The muffler comprises a heat resistant resin to provide resistance to acids, salts and various corrosive materials, together with an inorganic filler which optionally includes a glass fiber material.

Accordingly, it is an object of the present invention to provide a component of an exhaust system comprising glass fiber having excellent acid, alkali and heat-aging resistance, in particular glass fiber-reinforced synthetic resin product made by using such a glass fiber as a reinforcing fiber.

As a result of studies made repeatedly of a ZrO₂ containing glass fiber conventionally used as a cement reinforcing fiber, the present inventors have found that such glass fiber has not only an excellent alkali resistance superior to, but also excellent acid and heat-aging resistances equal or superior to those of glass fibers made of E-, C- and A-glasses and the like.

Throughout this specification the following terms are used:
E-glass is a non-alkali glass in which the content of alkali is suppressed to 0.8% or less, and has a composition of SiO₂-Al₂O₃-CaO-B₂O₃. This glass is excellent in heat resistance, water and weathering proof, and insulating ability;
C-glass is one kind of long fiber glass material and has a composition of Si0₂-Al₂0₃-Ca0-B₂0₃-Na₂0. This glass is excellent in heat resistance and weathering proof;
A-glass includes about 14% of alkali, and has a composition of SiO₂-CaO-Na₂O. This glass is inferior in water and fathering proof to E-and C-glasses, but is obtained at a lower cost.

In addition, as a result of studies made of a synthetic resin product reinforced with a ZrO₂ containing glass fiber, the present inventors have also found that the product has not only an excellent alkali resistance superior to, but also an excellent acid resistance equal or superior to products reinforced with those glass fibers made of E- and C-glasses and the like.

Further objects and advantages of the present invention will appear to those skilled in the art from the following description and the accompanying drawings, wherein:
Fig. 1 is an elevation view of an internal combustion engine silencer made in accordance with this invention with portions shown in section; and
Fig. 2 is a sectional view of a sheet-like molding material made in accordance with this invention.

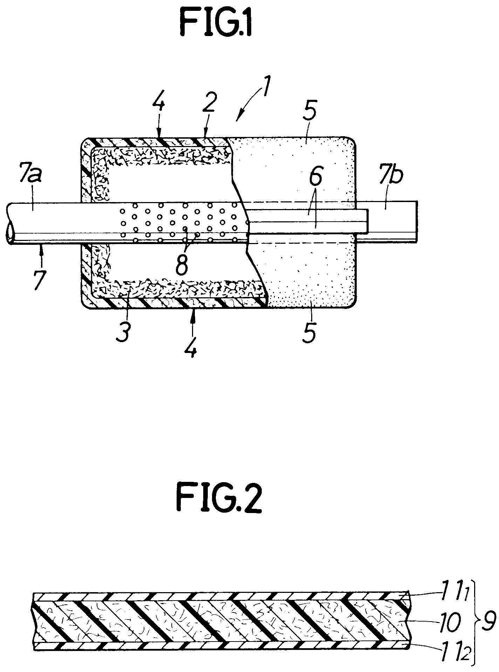

Fig. 1 illustrates a silencer 1 for use as a component of an exhaust system for an internal combustion engine in an automobile formed as a glass fiber-reinforced synthetic resin product in accordance with this invention. The silencer 1 includes an enclosure 2 and an interior material 3 adhered on an inner surface of the enclosure 2. The enclosure 2 is comprised of a pair of halves 4 having the same structure. Each of the halves 4 comprises a box-like body 5 and a joining flange 6 formed on the outer peripheral edge of the opening of each box-like body 5, with the joining flanges 6 of the halves being bonded to each other with an adhesive.

The silencer 1 has an exhaust pipe 7 mounted to pass therethrough. One projection 7a of the exhaust pipe 7 is on the exhaust gas inlet side and the other projection 7b is on the exhaust gas outlet side. The exhaust pipe 7 is provided with a large number of through holes 8 in an area within the enclosure 2 and facing the inner surface of the silencer 1.

The halves 4 are formed of a matrix consisting essentially of a synthetic resin and a glass fiber as a reinforcing fiber dispersed in the matrix. Therefore, the glass fiber is used as a forming material for the component of the exhaust system for the internal combustion engine.

The synthetic resins which may be used include thermoplastic and thermosetting synthetic resins. Some examples of suitable thermoplastic resins are polyamide resins, polyethylene terephthalate resins, polybutylene terephthalate resins, thermoplastic fluorine resins, polysulfone resins, polyphenylene ether resins, polyphenylene sulfide resins, polyether ether ketone resins, and liquid crystal polymers. Some examples of suitable thermosetting resins are epoxy resins, phenolic resins, unsaturated polyester resins, vinyl ester resins, diallyl phthalate resins and thermosetting poly carbodiimide resins. It is to be understood that other synthetic resins may be acceptable for making the reinforced product of this invention.

If a higher heat resistance is required for the thermosetting resin, an unsaturated polyester resin, an epoxy resin, a phenolic resin or a vinyl ester resin may be used. Among them, the phenolic and unsaturated polyester resins are effective.

A glass fiber having the following composition (suitable for a cement reinforcing fiber) is used:
55% by weight ≦ SiO₂ ≦ 62% by weight
1% by weight ≦ Al₂O₃ ≦ 5% by weight
CaO + MgO ≦ 12% by weight
13% by weight ≦ Na₂O + K₂O ≦ 18% by weight
B₂O₃ ≦ 4% by weight
12% by weight ≦ ZrO₂ ≦ 21% by weight
A starting material used for ZrO₂ is zircon sand (ZrO₂ SiO₂). In the above composition, CaO + MgO and B₂O₃ are optional elements and may be deleted.

In view of the need for alkali resistance and the advantages of mass production of the glass fiber, the ZrO₂ content is in a range of 12% to 21% by weight. The ZrO₂ content is measured according to JIS R-3105.

The glass fiber may be used in the form of a filament, a roving, a chopped strand, a net, a yarn, a tape, a mat, a cotton-like material, a fabric or the like.

The interior material 3 is made by pressing the above-described glass fiber into a mold of the shape of the inner surface of each of the halves 4 of the silencer 1 and if necessary, the interior material 3 may include an inorganic or organic binder added thereto and comprising, for example, a water glass, a synthetic resin and an inorganic silica with starch added thereto. Therefore, the glass fiber is likewise used as a material for forming a component of the exhaust system for an internal combustion engine. The adhesives which may be used for the interior material 3 include synthetic resin adhesives such as acrylic, epoxy, urethane, phenolic, silicone, polyimide adhesives. In view of the heat resistance requirement, epoxy adhesive is preferred.

The tents of the resistances to nitric acid, sulfuric acid and ammonia and to heat-aging were carried out for a glass fiber according to one embodiment of the present invention (which will be referred to as the glass fiber of the preferred embodiment) and for prior art glass fibers formed of conventional E-, C- and A-glasses to provide the results given in Table I.

The composition of the glass fiber of the preferred embodiment is as follows:

| | |
|---|---|
| SiO₂ | 61.7% by weight |
| Al₂O₃ | 2.0% by weight |
| CaO + MgO | 4.0% by weight |
| Na₂O + K₂O | 15.4% by weight |
| ZrO₂ | 16.9% by weight |

In the test of the resistance to nitric acid, a 10% nitric acid solution was used; in the test of the resistance to sulfuric acid, a 50% sulfuric acid solution was used, and in the test of the resistance to ammonia, 10% ammonia water was used. These tests were carried out by maintaining each of the solutions at 80°C and immersing each glass fiber into the solution for 100 hours. The heat-aging resistance test was carried out by maintaining each fiber at 650°C for 500 hours.

**TABLE I**

| Test | Preferred Embodiment | E-Glass | C-Glass | A-Glass |
|---|---|---|---|---|
| Resistance to HNO₃ | no abno. | cracking | no abno. | no abno. |
| Resistance to H₂SO₄ | no abno. | cracking | no abno. | no abno. |
| Resistance to ammonia | no abno. | cracking | cracking | cracking |
| Resistance to heat-aging | no abno. | cracking | cracking | cracking |
| no abno. = no abnormality | | | | |

As apparent from Table 1, the glass fiber of the preferred embodiment exhibited an excellent durability in each test.

The retention of strength property was measured for various glass fiber-reinforced synthetic resin plates made using the glass fiber of the embodiment and the prior art glass fibers formed of E- and C-glasses to provide the results given in Table II.

The above-described synthetic resin plate was made by a method which comprises dispersing and mixing the glass fibers, each having a length of about 1 inch, in an uncured unsaturated polyester resin, subjecting the mixture to rolling to form a sheet-like material, and curing the sheet-like material under a heated and pressed condition by use of a mold to form a flat plate.

The measurement of the retention of strength was carried out in the following manner: first, the bending strength of a test piece cut-off from each synthetic resin plate was measured; then, each test piece was immersed into a test solution maintained at 80°C and kept immersed for 500 hours; and finally the bending strength of each test piece withdrawn from the test solution was measured. Thus, the percentage of the bending strengths before an after immersion is determined. The test solutions used were a 10% nitric acid solution, a 50% sulfuric acid solution and a 10% ammonia water.

**TABLE II**

| Test solution | Reinforcing fiber used | | |
|---|---|---|---|
| | Preferred Embodiment | E-glass | C-glass |
| 10% nitric acid solution | 80% | 40% | 80% |
| 50% sulfuric solution | 90% | 60% | 100% |
| 10% ammonia water | 80% | 20% | 30% |

As is apparent from Table II, the synthetic resin plate made using the glass fiber of the preferred embodiment shows an excellent durability to the above-described test solutions and, based on an average of the three tests, was less reduced in strength than the plates made with the other two types of glass.

An example of the fabrication of the silencer 1 using the glass fiber of the preferred embodiment will now be described.

Fig. 2 illustrates a molding compound sheet 9 which is comprised of a main material 10 and polyethylene films 11₁ and 11₂ affixed on opposite surfaces of the main material, respectively. The composition of the main material 10 is as follows:

| Elements | Parts by Weight |
|---|---|
| Glass fiber of the preferred embodiment | 30% |
| Unsaturated polyester resin | 23% |
| Filler (clay, calsium carbonate, etc.) | 58% |
| Catalyst, thickener, etc. | 19% |

The molding compound sheet 9 was placed into a mold for molding the halves 4 of the enclosure 2 and subjected to a molding under a heated and pressed condition to form a pair of halves 4. A mat was produced using the glass fiber of the preferred embodiment by rolling and subsequent needling and then the mat was placed into a mold and pressed to form an interior material 3. The interior material 3 was bonded to the inner surface of each half 4 with an epoxy adhesive and then, with the exhaust pipe 7 clamped between the halves 4, the joining flanges 6 were bonded to each other with an epoxy adhesive.

The silencer 1 exhibits excellent resistance to nitrogen acids, ammonia and sulfur acids that accumulate therein. Even if a situation occurs in which the temperature of an exhaust gas exceeds 600°C as a result of misfiring of the internal combustion engine, the unsaturated polyester resin forming the matrix of the enclosure 2 will not be melted because of the heat insulting effect of the interior material 3 and hence, the heat-aging resistance of the silencer 1 will not be adversely affected In this case, because the interior material 3 has acid, alkali and heat-aging resistances, no problem arises from the presence of the condensed liquid in the exhaust system or from the heat developed from an engine misfiring. Moreover, the interior material 3 also has a sound deadening property and hence a high sound deadening effect is obtained.

The production of the molding compound sheet 9 was carried out in the following manner. A resin paste containing an unsaturated polyester resin, a filler, a catalyst, a thickener and the like was applied onto one polyethylene film 11₁ drawn from a roll, and the glass fiber of the preferred embodiment was spreaded onto the resin paste to prepare a main material 10. The same resin paste as that described above was applied onto the other polyethylene film 11₂ drawn from a roll. The resin paste-applied surfaces of the one polyethylene film 11₁ and the other polyethylene film 11₂ were joined in face-to-face relationship and then overlapped one on another and passed through impregnating rollers and thickness-adjusting rollers to form the molding compound sheet 9.

In summary, a glass fiber containing a specified amount of ZrO₂ as described above exhibits excellent acid and alkali resistances in environments including nitrogen acids and ammonia and, moreover, has a good heat-aging resistance. In this case, the nitrogen acids include nitric and nitrous acids. A synthetic resin product made using, as a reinforcing fiber, a glass fiber containing the specified amount of ZrO₂, has excellent acid and alkali resistances. Further, a silencer of an exhaust system for an internal combustion engine, made using a glass fiber of the above-described type as a forming material, exhibits excellent acid, alkali and heat-aging resistances.

## Claims

1. A component of an exhaust system for an internal combustion engine, said exhaust system comprising a redox catalyst upstream of said component, whereby said component includes glass fiber characterized by a composition comprising by weight percent of the total weight of the glass fibre material:
55% by weight ≦ SiO₂ ≦ 62% by weight
1% by weight ≦ Al₂ O ₃ ≦ 5% by weight
CaO + MgO ≦ 12% by weight
13% by weight ≦ Na₂ O + K₂ O ≦ 18% by weight
B₂ O ₃ ≦ 4% by weight
12% by weight ≦ ZrO₂ ≦ 21% by weight

2. A component as claimed in claim 1, wherein said component is an enclosure made of synthetic resin reinforced by said glass fiber.

3. A component as claimed in claim 1 or claim 2, wherein said enclosure is an enclosure of a silencer.

4. A component as claimed in any one of the preceding claims, wherein said component is an enclosure which includes an interior material, comprising said glass fiber.

## Patentansprüche

1. Komponente eines Abgassystems für einen Verbrennungsmotor, wobei das Abgassystem einen Redox-Katalysator stromaufwärts der Komponente aufweist und wobei die Komponente Glasfaser enthält, **gekennzeichnet durch** eine Zusammensetzung, die in Gewichtsprozent des Gesamtgewichts des Glasfasermaterials enthält:
55 Gew.-% ≦ SiO₂ ≦ 62 Gew.-%
1 Gew.-% ≦ Al₂O₃ ≦ 5 Gew.-%
CaO + MgO ≦ 12 Gew.-%
13 Gew.-% ≦ Na₂O + K₂O ≦ 18 Gew.-%
B₂O₃ ≦ 4 Gew.-%
12 Gew.-% ≦ ZrO₂ ≦ 21 Gew.-%.

2. Komponente nach Anspruch 1, in der die Komponente eine Umhüllung ist, hergestellt aus mit der Glasfaser verstärktem Kunstharz.

3. Komponente nach Anspruch 1 oder Anspruch 2, in der die Umhüllung eine Umhüllung eines Schalldämpfers ist.

4. Komponente nach einem der vorhergehenden Ansprüche, in der die Komponente eine Umhüllung ist, die ein Innenmaterial enthält, welches die Glasfaser aufweist.

## Revendications

1. Composant pour un dispositif d'échappement destiné à un moteur à combustion interne, ledit dispositif d'échappement comprenant un catalyseur d'oxydo-réduction situé en amont dudit composant, ledit composant comprenant un matériau en libre de verre, caractérisé par une composition comportant en % en poids du poids total du matériau en fibre de verre:
55 % en poids ≦ SiO₂ ≦ 62% en poids
1% en poids ≦ Al₂O₃ ≦ 5% en poids
CaO +MgO ≦ 12 % en poids
13 % en poids ≦ Na₂O + K₂O ≦ 18 % en poids
B₂O₃ ≦ 4% en poids
12 % en poids ≦ ZrO₂ ≦ 21% en poids

2. Composant selon la revendication 1, dans lequel ledit composant est un boîtier réalisé en une résine synthétique renforcée par ledit matériau en fibre de verre.

3. Composant selon la revendication 1 ou 2, dans lequel ledit boîtier est un boîtier d'un silencieux.

4. Composant selon l'une quelconque des revendications précédentes, dans lequel ledit composant est un boîtier qui comporte un matériau intérieur, comprenant ledit matériau en fibre de verre.
